# EUROPEAN PATENT APPLICATION

(11) **EP 4 438 573 A1**
(43) Date of publication of application: **02.10.2024**
(21) Application number: 23166202.4
(22) Date of filing: 31.03.2023
(51) Int. Cl.: C03C 17/23, B32B 17/00, C03C 17/34, G06F 3/00

(54) **GLAZING WITH TOUCH SENSING CAPABILITIES**

(71) Applicant: AGP Worldwide Operations GmbH, 6300 Zug (CH)
(72) Inventor: MOSCOSO ROJAS, Andrés Camilo, 52499 Baesweiler (DE); LUNA PRIETO, Isaac Alonso, 15081 Lima (PE); KRASNOV, Alexey, Canton, 48188 (US); SARMIENTO SANTOS, Andrés Fernando, Canton, 48188 (US)
(74) Representative: ABG Intellectual Property Law, S.L.

(57) **Abstract**

The present invention falls in the field of automotive glazing, more particularly automotive sidelites, windshields, backlites and roofs, and relates to a glazing having a coating with capacitive touch sensing capabilities. The invention also relates to a method for manufacturing such glazing with touch sensing capabilities.

## Description

### FIELD OF THE INVENTION

The present invention falls in the field of automotive glazing, more particularly automotive sidelites, windshields, backlites and roofs, and relates to a glazing having a coating with capacitive touch sensing capabilities. The invention also relates to a method for manufacturing such glazing with touch sensing capabilities.

### BACKGROUND OF THE INVENTION

Touch technology and the corresponding touch sensing methods are well known in the state of the art to provide user-friendly and intuitive interfaces on displays or other types of devices, such as interactive glazing. Different principles for touch sensing control are known, such as projected capacitive and surface capacitive, resistive, IR detection, camera tracking, surface-acoustic-wave and FTIR, among others. Several indium tin oxide (ITO) or other transparent conducting oxide (TCO) layers are commonly used for touch sensing applications for smartphones or displays. In particular, capacitive touch technology uses a uniform electrostatic field to detect touch commands.

The present invention is related to capacitive touch sensing technology.

There is a need in the art of automotive glazing for an automotive glazing system with capacitive touch sensing capabilities suitable for being installed in a vehicle, wherein the automotive glazing system is simple, has good sensitivity, a reliable connection with enhanced mechanical performance, and is also aesthetically appealing.

There is also a need in the art for a sidelite, a windshield, a backlite and/or a roof suitable for being installed in a vehicle, wherein the sidelite, windshield, backlite or roof comprises a glazing system with touch sensing capabilities with the aforementioned characteristics.

### DESCRIPTION OF THE INVENTION

The present invention provides a solution for the above-mentioned issues by an automotive glazing system with touch sensing capabilities according to independent claim 1, a sidelite window, a roof, a windshield, or a backlite for a vehicle according to claim 13, a vehicle according to claim 14 and a method for manufacturing the automotive glazing system according to claim 15. In dependent claims, preferred embodiments of the invention are defined.

In a first inventive aspect, the present invention provides an automotive glazing system with touch sensing capabilities, comprising:
- a glazing comprising:
   - a glass layer having two major surfaces, and
   - a transparent coating disposed on at least one portion of a major surface of the glass layer, wherein the coating comprises an electrically conductive layer that has a sheet resistance less than 250 Ohm/sq, and wherein the coating is structured into two or more electrically isolated segments, wherein each one of the segments of the coating is spaced apart from any adjacent segment of the coating, and
- at least one electrical connector spaced apart from any of the segments of the coating,
wherein each electrical connector is capacitively coupled to a segment of the coating, so that the electrical connection between a segment of the coating and an electrical connector is made with no physical contact between them.

A segment of the coating and an electrical connector to which the segment is capacitively coupled are physically separated and there is no conductive material making the electrical connection between these two elements. Instead, both separated elements, which are electrically conductive, are connected by a capacitive coupling created between them.

The transparent coating is disposed on at least one portion of a major surface of the glass layer, wherein in an operative situation wherein the automotive glazing system is mounted in a vehicle, this major surface of the glass layer corresponds to the surface that faces the interior of vehicle, and which is the surface that a person would touch or approach.

By saying that the coating is "structured into two or more electrically isolated segments", it should be understood that the layer or layers of the coating is/are segmented into two or more separate segments, with no conductive material electrically connecting them. Another synonym used herein for "structured" is "patterned".

The following terminology is used along the whole document to describe features of the invention.

The term "layer", as used in this context, shall include the common definition of the word, i.e.: a sheet, quantity, or thickness, of material, typically of some homogeneous substance.

This range of sheet resistance (less than 250 Ohm/sq) of the electrically conductive layer of the coating is suitable for achieving a sufficient electrical potential differential for using the glazing system according to the present aspect of the invention in a capacitive touch sensing system. In other words, the coating of the glazing system according to the present aspect of the invention has a sufficient low sheet resistance level to enable to detect the location of a touch or approach of a part of a user's body when the glazing system is part of a capacitive touch sensing system.

It should be mentioned that the sheet resistance of the electrically conductive layer depends on different aspects, such as the thickness, material type, and the oxidation state of the layer.

Sheet resistance is generally measured with a sheet resistance measuring tool, preferably a 4-point probe tool. For clarification, the resistivity characterizes an intrinsic electrical property of a material, while sheet resistance is an extrinsic property which depends on resistivity, geometry and thickness of said material.

Thickness values are geometric thickness values.

The term "glazing" should be understood as a product comprised of at least one layer of a transparent or substantially transparent material, preferably glass, which serves to provide for the transmission of light and/or to provide for viewing of the side opposite to the viewer and which is mounted in an opening in a building, vehicle, wall or roof or other framing member or enclosure.

The term "glass" can be applied to many organic and inorganic materials. From a scientific standpoint, "glass" is defined as a state of matter comprising a non-crystalline amorphous solid that lacks the long-range ordered molecular structure of true solids. Glasses have the mechanical rigidity of crystals with the random structure of liquids. The types of glass that may be used include but are not limited to the common soda-lime variety typical of automotive glazing as well as aluminosilicate, lithium aluminosilicate, borosilicate, glass ceramics, and the various other inorganic solid amorphous compositions which undergo a glass transition and are classified as glass. The glass layers may be comprised of heat absorbing glass compositions as well as infrared reflecting and other types of coatings.

The term "glass substrate" or "glass pane" should be understood as a sheet, quantity, or thickness of material, typically of some homogeneous substance. The "glass substrate or pane" may comprise one or more layers. The glass substrate can be, for example, clear float glass or can be tinted or colored glass. The glass substrate or the glass layer can be of any desired dimensions, e.g., length, width, shape, or thickness.

The terms "monolithic glazing" and "laminated glazing" refer respectively to a glazing having one glass layer and to a laminated glazing having at least two glass layers respectively.

"Laminates", in general, are products comprised of multiple sheets of thin, relative to their length and width, material, with each thin sheet having two oppositely disposed major faces and typically of a relatively uniform thickness, which are permanently bonded to each other across at least one major face of each sheet.

The term "stack" refers to the arrangement in a pile manner of a plurality of layers. When describing a coating stack, the convention of numbering the coating layers in the order of deposition or disposed by any other method upon the glass substrate should be used. As for one individual layer of a coating, "the top" or "the top surface" of an individual layer has to be understood as the side of the layer furthest from the substrate while "the bottom" or the "bottom surface" has to be understood as the side of the layer which is either in contact with the substrate or oriented towards the substrate in case this layer is not the first layer of the coating stack.

With respect to a second layer located on a first layer, the term "on" should be understood as including both the option of the first and second layers being in direct contact (i.e. physical contact) and the option of having one or more additional layers located between the first layer and the second layer.

When a range of values is provided in the present document, it should be understood that the two limiting values of the range are also included. For example, if a range of 20 to 100 nm is provided, the values 20 and 100 nm are also included within the range.

The glazing system of the present invention is intended for vehicles, and more particularly for automobiles (e.g. an automotive roof) such as passenger cars.

As mentioned before, each of the electrical connectors is located at a certain physical distance from any of the segments of the electrically conductive layer, so that there is no physical contact between an electrical connector and a segment of the coating. The electrical connection between a particular segment of the coating and an electrical connector is capacitive coupling.

As mentioned before, the coating is structured in two or more electrically isolated segments. Each of the electrically isolated segments of the coating acts as a touch capacitive electrode for a touch sensing system, since they are conductive layers. In other words, each electrically isolated segment of the coating acts as a capacitive sensor. The shape of each of the electrically isolated segment of the coating can vary according to design requirements. The distance of an isolated segment from any adjacent isolated segment of the coating can also vary according to design requirements.

The electrically isolated segments of the coating are structured in a way that they can be used as single touch buttons (i.e. each electrically isolated segment of the coating is configured to act as a single touch button) or several segments of the coating can be used as a slider, for example for dimmable capabilities (i.e. two or more electrically isolated segment of the coating are configured to act as a slider, for example for dimmable capabilities).

In an embodiment, the electrically isolated segments of the coating are disposed in a location of the glazing system that is a visible area for a user being placed facing the surface of the glass where the coating is disposed, such that the user can easily access and touch with his finger these electrically isolated segments.

The present invention operates in such a manner that an electrical field is generated in the area of the electrically conductive layer of the coating by applying an electrical voltage to the segmented electrically conductive layer. The electrical voltage is supplied by a touch sensing electronics by suitable wiring to one or more electrical connectors, and the one or more electrical connector are capacitively coupled to a segment of the coating. The touch sensing electronics, in addition to supplying the electrical voltage to one or more of the electrical connectors, has the function of evaluating the sensed voltages between a connector and a segment of the coating in such a way that the segments of the coating act as respective electrodes of a capacitive sensing system.

The present invention solves the problem of lacking a simple, reliable, and aesthetically appealing touch solution for automotive glazing.

The present invention advantageously provides transparent touch sensing capability to a glazing system with an improved sensitivity due to the proximity of the user and a reliable connection with enhanced mechanical performance.

The coating has several advantages, such as:
- The coating withstands bending.
- The coating has high tolerance to temperatures required for glass bending (e.g., 650°C).
- The coating has high environmental stability when deposited or disposed by any other method on a glass surface exposed to air.
- The coating has a sufficient transparency in the visible range of the electromagnetic spectrum.

Preferred examples of the separation distance of an electrical connector from a respective segment of the coating to be capacitively coupled is comprised between 0.1 and 5 mm, preferably between 0.1 and 3.0 mm, and more preferably between 0.1 and 2.1 mm.

In an embodiment, the automotive glazing system comprises a plurality of electrical connectors, wherein the number of electrical connectors is preferably equal to the number of segments of coating.

In a particular preferred embodiment, the capacitive coupling between the electrical connectors and the segments of the coating is one-to-one, such that one electrical connector is capacitively coupled to one particular segment of the coating.

In an embodiment, at least one electrical connector are arranged on a major surface of the glass layer and/or of the additional glass layer adjacent to an end of said glass layer and/or said additional glass layer, i.e. adjacent a part of the perimeter.

In a preferred embodiment, the coating is a low-emissivity coating. Advantageously, low-emissivity contributes to the thermal comfort inside the automobile cabin as a low-emissivity coating is a solar-control coating.

In respect to the glazing, the glazing may comprise a single glass layer (i.e. so-called monolithic glazing) or may comprise an additional glass layer (i.e. a laminated glazing).

In the embodiment where the glazing has a single glass layer, the single glass layer has two opposed major surfaces, namely an outer and an inner major surface. In this embodiment, the inner major surface corresponds to the innermost surface of the glazing intended to face the interior of a vehicle in an automotive application and the outer major surface corresponds to the outermost surface of the glazing intended to face the exterior. In an embodiment, the single glass layer glazing is tempered.

In an embodiment where the glazing has a single glass layer:
- the coating is disposed on at least one portion of the inner major surface of the single glass layer; and
- each electrical connector is disposed on the inner major surface of the single glass layer or on the outer major surface of the single glass layer.

In an embodiment where the glazing comprises an additional glass layer, a bonding layer is disposed between the glass layer (also named first glass layer herein) and the additional glass layer (also named second glass layer herein). In this embodiment where the glazing comprises more than one glass layer, the bonding layer, such as a thermoplastic interlayer (e.g., PVB), has the primary function of bonding the major surfaces of adjacent glass layers to each other. These major surfaces of the first and second glass layers are also called inner major surfaces of the first glass layer and the second glass layer, respectively. In other words, the inner major surface of the first glass layer is bonded with the inner major surface of the second glass layer. The major surfaces opposed to the inner major surfaces of the first and second glass layer are called herein outer major surfaces. In this embodiment, the outer major surface of the first glass layer corresponds to the innermost surface of the glazing intended to face the interior of a vehicle in an automotive application and the outer major surface of the second glass layer corresponds to the outermost surface of the glazing intended to face the exterior in an automotive application.

In an embodiment of the automotive glazing system where the glazing comprises an additional glass layer bonded to the glass layer (i.e. the glazing is a laminated glazing):
- the coating is disposed on at least one portion of the outer major surface of the glass layer, and
- each electrical connector is disposed in one of the following locations:
   - on a portion of the inner major surface of the glass layer,
   - on a portion of the inner major surface of the additional glass layer,
   - between the inner major surface of the glass layer and the inner major surface of the additional glass layer,
   - on a portion of the outer major surface of the glass layer, or
   - on a portion of the outer major surface of the additional glass layer.

In this embodiment of the automotive glazing system where the glazing comprises multiple glass layers, preferably each electrical connector is disposed at a location inside the laminated glazing, namely on a portion of the inner major surface of the glass layer, on a portion of the inner major surface of the additional glass layer, or between the inner major surface of the glass layer and the inner major surface of the additional glass layer. Conventional electrical connectors in glazing which comprise multiple glass layers are generally placed directly on the outer major surface of the glass layer (i.e. the innermost surface of the glazing) and soldered directly to the electrode. In this preferred embodiment of the present invention, however, a reliable connection is achieved because the electrical connector is placed at a location inside the laminated glazing. When the electrical connector is placed inside the laminated glazing, the electrical connector is laminated between the two glass layers, which advantageously protects it from unwanted vibration or pulling during installation, among other potential drawbacks. As a result, these embodiments of the glazing system have significantly improved mechanical performance and reliability. Also, the electrical connector is kept in place inside the laminated glazing by the bonding layer.

In an embodiment, the at least one electrical connector is disposed at a location spaced apart from any of the segments of the coating by at least the thickness of one glass layer, so that the capacitive coupling between a segment of the coating and a respective connector is made with the separation of at least one glass layer of the glazing, preferably the glass layer. When there are more than one electrical connector, each of the electrical connectors are disposed at a location spaced apart from the segments of the coating. Preferably, the electrical connectors are located in the same location.

According to this embodiment, when the glazing comprises a single glass layer, the at least one electrical connector is located on the outer major surface of the single glass layer (corresponding to the outermost surface of the glass layer that faces the outside of the vehicle when the glazing system is mounted e.g. on a vehicle roof). When the glazing comprises an additional glass layer, the at least one electrical connector is located on the inner major surface of the glass layer (also called first glass layer), on the inner major surface of the additional glass layer (i.e. the second glass layer), on the outer major surface of the additional glass layer (i.e. the second glass layer), or between the inner major surface of the glass layer and the inner major surface of the additional glass layer, such as at least partially embedded in the bonding layer.

In an embodiment, the at least one electrical connector is disposed on the same major surface where the coating is disposed, but without any physical contact with the coating. In an example of a glazing comprising a single glass layer, the at least one electrical connector is located on the inner major surface of the single glass layer (corresponding to the innermost surface of the glass layer that faces the inside of the vehicle when the glazing system is mounted e.g. on a vehicle roof). In an embodiment of a glazing comprising an additional glass layer, the at least one electrical connector is located on the outer major surface (innermost surface of the glazing) of the glass layer (also called first glass layer).

In an embodiment, the glazing is bent.

In an embodiment, the type of glass for the single glass layer of a monolithic glazing or for both glass layers of a laminate include, but are not limited to, common soda-lime variety typical of automotive glazing as well as aluminosilicate, lithium aluminosilicate, borosilicate, glass ceramics, and various other inorganic solid amorphous compositions which undergo a glass transition and are classified as glass including those that are not transparent.

Preferably, the thickness of the glass layer and/or of the additional glass may vary widely and thus be ideally adapted to the requirements of the individual cases. In an embodiment, the thickness of the glass layer and/or of the additional glass of the glazing is lower than 5.0 mm, preferably comprised between 0.3 mm and 5.0 mm, such as between 0.5 mm and 4.0 mm or between 1.0 mm and 3.0 mm. Possible examples of thicknesses of the one glass layer and/or of the additional glass are about 1.5 mm, 1.6 mm, 1.7 mm, 1.8 mm, 1.9 mm, 2.0 mm, 2.1 mm, 2.2 mm, 2.3 mm, 2.4 mm, 2.5 mm, 2.6 mm, 2.7 mm, 2.8 mm, 2.9 mm or 3.0 mm. More preferably, the glass layer and/or of the additional glass is about 2.1 mm thick soda-lime glass layer, including ultra-clear, clear or green soda-lime.

In a preferred embodiment of a laminated glazing according to the invention, the material selected for the bonding layer contains a polymer, preferably a thermoplastic polymer, and more preferably a clear thermoset plastic, such as polyvinyl butyral (PVB). Additionally, ethylene vinyl acetate (EVA) or thermoplastic polyurethane (TPU) may be used as bonding layers.

Additional embodiments of a laminated glazing according to the invention may include as a bonding layer a plastic interlayer made of tinted PVB. Tinted PVB interlayers may have different levels of light transmission and can be of different thicknesses.

Preferably, the thickness of the plastic bonding layer, clear or tinted is comprised between 0.3 mm and 2.0 mm, such as between 0.5 mm and 1.0 mm, e.g. about 0.5 mm, 0.6 mm, 0.7 mm, 0.8 mm, 0.9 mm or 1.0 mm. Particular thicknesses for the plastic bonding layer, e.g. a - tinted - PVB interlayer, are for instance 0.38 mm, 0.631 mm and 0.76 mm.

In an embodiment, the PVB plastic bonding layer is comprised of particles that absorb partially the infrared light of the sun. Preferably, the bonding layer has solar attenuating properties.

Examples of suitable materials for the electrically conductive layer of the coating include one material selected from:
- transparent conductive oxide (TCO),
- Ag-based layer (such as AgNW (silver nanowires)),
- metal mesh,
- PEDOT,
- carbon-based materials,
- thin film metal or alloy-based material, or
- a combination thereof.

In an embodiment, the electrically conductive layer of the coating comprises a single layer. In an alternative embodiment, the electrically conductive layer of the coating comprises multiple layers, preferably multiple layers of a combination of two or more materials from the above list.

Possible preferred examples of TCOs to be used for the electrically conductive layer are: indium tin oxide (c-ITO), fluorine doped tin oxide (FTO), niobium doped anatase TiO2 (NTO), doped zinc oxide ZnSnOx, IZTO, or aluminum doped zinc oxide (AZO).

A c-ITO is a type of material of the large class of materials called transparent conducting oxide (TCO) with a sufficiently high sheet resistance to enable a low emissivity and, at the same time, be sufficiently transparent to provide daylight coming through e.g. the roof into the vehicle interior. It requires post-deposition activation for its crystallization to attain high levels of both electrical conductivity and optical transmission. In case of a laminate, the activation is usually achieved as a stand-alone thermal-assisted step or/and during high-temperature bending which is required to curve each of the two glass layers to a desired shape before their lamination together by means of thermoplastic bonding layer, such as PVB. The lamination is done in such a way as to leave the coating on the outer major surface of the glass layer after the lamination.

The physical thickness of the electrically conductive layer of the coating may vary according to the requirements of the individual cases. In an embodiment, example ranges of the physical thickness of the electrically conductive layer of the coating of the glazing according to the invention are: between 10 nm and 250 nm, preferably between 60 nm and 140 nm and more preferably between 80 nm and 110 nm.

In an embodiment, the electrically conductive layer of the coating has a sheet resistance less than 100 Ohm/sq, and more preferably less than 30 Ohm/sq.

In an embodiment, the coating comprises a single electrically conductive layer.

In other embodiments, the coating further comprises a protective dielectric layer disposed on the outer surface (i.e. on top) of the electrically conductive layer. In this embodiment, the electrically conductive layer is located between the outer glass surface and the dielectric protective layer. Advantageously, this protective dielectric layer serves to protect the electrically conductive layer of the coating from mechanical damage and to improve long time performance. The protective dielectric layer is preferably transparent. In a particular embodiment, the protective dielectric layer comprise a material selected from the following list: SiOx, SiOxNy, SiNx, TiOx, TiSiOx, ZrOx, ZrTiOx, AlOx, CrOxSi, AlTiOx, and ZrSiOx.

If the coating includes a protective dielectric layer, the combination of the electrically conductive layer with the protective dielectric layer is transparent.

As mentioned before, the term "transparent" when applied to a layer or a coating should be understood as "substantially transparent" in the sense that allows the glass substrate with the layer or coating disposed thereon to function as a window. While a typical "transparent material" can have sufficient visible light transmission such that materials can be viewed clearly through the "transparent material", in the context of this invention, the term "transparent coating" should be interpreted as including translucent to visible light. In the context of the present invention, the "transparent coating" means having a transmittance in the visible light spectrum of more than 30%, preferably of more than 50%, particularly preferably of more than 75%, particularly preferably of more than 80%, particularly preferably of more than 85%, particularly preferably of more than 90% and particularly preferably of more than 95%.

In a preferred embodiment, the transparent coating has a visible light transmission above 80%. In the context of the present invention, the Visible Light Transmission (Tvis), also known as Visible Light Transmittance parameter for the glazing comprising the coating, is measured according to the International Organization for Standardization Standard ISO 9050:2003, "Glass in building - Determination of light transmittance, solar direct transmittance, total solar energy transmittance, ultraviolet transmittance and related glazing factors" (ISO 9050:2003)."

In an embodiment, at least a portion of one or more of the segments of the coating has a surface roughness different from adjacent regions of the major surface of the glass layer with no segments. In this embodiment, on the major surface of the glass layer where the coating is arranged, one or more of the segments of the coating have a surface roughness which is different from the surface roughness of adjacent non-coated regions of the same major surface. The provision of a different surface roughness advantageously makes it easier and more comfortable for the user to recognize the area to be contacted with their finger. For example, the segments of the coating may have a higher surface roughness than adjacent non-coated regions of the same major surface of the glass layer. Preferably, the entire segment has a different surface roughness.

In an embodiment, the different roughness is provided at an outer surface of the segments. The outer surface of the coating refers to the surface of the coating most distant to the glass layer. According to this embodiment, if the coating has a single electrically conductive layer, at least a portion of the outer surface of the single electrically conductive layer has a different surface roughness. If the coating has an electrically conductive layer and a protective dielectric layer, at least a portion of the outer surface of the protective dielectric layer has a different surface roughness.

In an embodiment, the automotive glazing system of the first inventive aspect according to any described embodiment or combination thereof may further comprise an obscured band disposed:
- on the coating so that the coating is located between the obscured band and the glass layer,
- on the major surface of the glass layer opposed to the major surface where the coating is disposed, and/or
- on a major surface of the additional glass layer, if present,
wherein the obscured band is placed overlapping at least part of the projected area of the electrical connectors on the glass layer for hiding a part or the totality of the electrical connectors.

Advantageously, the obscured band has one or more of the following functions:
(a) hiding part or the totality of the electrical connectors;
(b) hiding integrated devices that may be laminated inside the glazing; and/or
(c) protecting the sealant, such as polyurethane, used to fix the glazing to the vehicle body all around its perimeter. The sealant might be sensitive and degrade with UV light from the sun, so the obscured band serves to beneficially block the UV light from penetrating and damaging the sealant once the glazing system is mounted as part of a vehicle.

If the glazing comprises a single glass layer, the obscured band is placed on the outer major surface (i.e. corresponding to the outermost surface of the glass layer that faces the outside of the vehicle when the glazing system is mounted in a vehicle) of the single glass layer, and/or on the coating, so that the coating is located between the obscured band and the glass layer.

If the glazing comprises a glass layer and an additional glass layer, the obscured band is placed on the coating, so that the coating is located between the obscured band and the glass layer, or on the major surface of the glass layer opposed to the major surface where the coating is disposed, and/or on a major surface of the additional glass layer.

Preferably, the obscured band can be constituted by a black frit or opaque interlayer, such as printed interlayer.

Preferably, the obscured band is placed along the perimeter of the glazing. Preferably, the obscured band is placed overlapping most or all of the projected area of the electrical connectors on the glass layer.

In an embodiment, the automotive glazing system comprises a plurality of obscured bands arranged at different surfaces of the glazing. Advantageously, this allows more efficiently hiding the electrical connectors and/or other possible integrated devices.

In an embodiment, the automotive glazing system of the first inventive aspect according to any described embodiment or combination thereof may further comprise a graphic obscuration for showing the user the touch area, wherein the graphic obscuration is disposed such that it delimits at least partially the segments of the coating. This graphic obscuration can be disposed:
- on the coating so that the coating is located between the graphic obscuration and the glass layer,
- on the major surface of the glass layer opposed to the major surface on which the coating is disposed, and/or
- on a major surface of the additional glass layer, if present.

When the glazing of the automotive glazing system is monolithic (i.e. the glazing comprises a single glass layer), the graphic obscuration may be disposed:
- on the coating so that the coating is located between the graphic obscuration and the single glass layer, or
- on the outer major surface of the single glass layer , i.e. the major surface opposed to the inner major surface on which the coating is disposed.

When the glazing of the automotive glazing system comprises two glass layers, the graphic obscuration may be disposed:
- on top of the coating so that the coating is located between the graphic obscuration and the glass layer (i.e. the first glass layer), or
- on the inner major surface of the glass layer (i.e. the first glass layer) opposed to the outer major surface on which the coating is disposed, or
- on the inner or outer major surface of the additional glass layer (i.e. the second glass layer).

Advantageously, the main purpose of the graphic obscuration is to indicate to the user at which specific area on the surface he should make a touch. The graphic obscuration may be arranged as a contour around a segment of the coating, or it may be arranged at least partially filling the area of the segment where the user is supposed to touch. Preferably, when the graphic obscuration is arranged at least partially filling the area of the segment, the graphic obscuration is disposed on a major surface different from the major surface where the coating is disposed, the graphic obscuration overlapping the projected area of the segment on the major surface where the graphic obscuration is present.

Preferably, the graphic obscuration is made of the same materials as the obscured band, i.e., is made of a black frit or opaque interlayer, such as a printed interlayer.

Graphic obscuration can be provided in combination with or without the obscured band.

In a preferred embodiment, each electrical connector of the automotive glazing system comprises or consists of a busbar made of a conductive material, preferably conductive foils or conductive wires. In an embodiment where the glazing is a laminate, the conductive foils or conductive wires are preferably embedded between the two glass layers.

The busbar is configured for being connected with touch sensing electronics, for example by means of a Flexible Printed Circuit (FPC) or similar. As mentioned before, depending on the required accuracy and the size of the glazing, the segments of coating acting as touch capacitive electrodes may present a different number and sizes. Also, different number of electrodes may be simultaneously activated.

The touch sensing electronics transmits electric pulses through the connector/s to the segments of coating of the glazing system acting as touch capacitive electrodes.

The signal applied to the electrical segments of the coating of the glazing system can be, for example, an AC voltage signal of 0 to 5 V and frequencies between 1 kHz to 10 MHz. The voltage is applied to an electrode (segment) then to the next electrode, and so on, thus creating a pattern of electric field across the entire surface area of the coating. As the human body is an electrical conductor, a touch event on the surface of the segments is detected through the sensing of a disturbance in the electrostatic field, measurable as a change in capacitance for example, generated by contact or approach with the human body, e.g. with the finger.

The touch sensing electronics, connected to the electrical connectors, detects when a human finger approaches the segments of coating and a controller reads the capacitive changes of the segments of coating. The controller is connected to the ECU of the vehicle that controls one or more functional elements based on the capacitive changes read.

The functional element may be one or more electro-optical functional, lighting and/or display element and/or one or more peripheral controllable by the ECU as a result of the instructions input by the user via the user's interaction with the automotive glazing system. Non-limited examples of electro-optical functional elements include: variable light transmission films such as PDLC (Polymer Dispersed Liquid Crystal), SPD (Suspended Particle Device) and LC (Liquid Crystal) films, also known as smart-glass. A non-limited example of lighting is lighting for interior cabin illumination. A non-limited example of display elements is any display integrated or embedded into the glazing. Non-limited examples of peripherals (devices integrated exterior to the glazing) are: reading light, radio, etc.

In an embodiment, the at least one electrical connector is attached to the glazing by intermediate of a conductive element, the conductive element being conductive adhesive or a printed silver paste. The main purpose of the conductive element is to improve the electrical connection and to adhere the electrical connector to the surface to which it is attached.

In an embodiment, the automotive glazing system further comprises an anti-fingerprint coating disposed on top of the coating so that the coating is placed between the anti-fingerprint coating and the major surface of the glass layer. The main purpose of this anti-fingerprint coating is to minimize undesired fingerprint markings. Any known anti-fingerprint coating may be used.

In an embodiment, the glazing is a curved glazing. In a preferred embodiment, the curved glazing is one wherein the minimum curvature radius of it is less than or equal to 200 mm. Preferably, the glazing according to any of the embodiments has a radius of curvature that infers to a complex shape or complex curvature.

In an embodiment, the glazing of the automotive glazing system is a laminated glazing for a vehicle, for example for a roof, a windshield or a backlite of a vehicle.

In a second inventive aspect, the present invention provides a sidelite window, a roof, a windshield, or a backlite for a vehicle or similar, wherein the sidelite window, roof, windshield, or backlite comprises at least the automotive glazing system according to any of the embodiments, or any suitable combination thereof, of the first inventive aspect of the invention. In a particular embodiment of the automotive sidelite window, roof, windshield, or backlite, it comprises a laminated glazing having two or more bonded glass layers.

In a third inventive aspect, the present invention provides a vehicle, comprising at least a sidelite window, a roof, a windshield, or a backlite according to any embodiment of the second inventive aspect.

The term "vehicle" in the present invention includes, but is not limited to, road vehicles (e.g. cars, busses, trucks, agricultural and construction vehicles, cabin motorbikes), railway vehicles (e.g. locomotives, coaches), aircraft (e.g. airplanes, helicopters), boats, ships and the like. For instance, the vehicle may be a road vehicle and more particularly a car.

In a fourth inventive aspect, the present invention provides a method for manufacturing an automotive glazing system with touch sensing capabilities according to any of the embodiments of the first inventive aspect, the method comprising the following steps:
- providing a glass layer,
- providing a transparent coating on at least one portion of a major surface of the glass layer, wherein the coating comprises an electrically conductive layer that has a sheet resistance less than 250 Ohm/sq, and wherein the coating is structured in two or more electrically isolated segments, wherein each one of the segments is spaced apart from any adjacent segment, and
- providing at least one electrical connector at a distance from any of the segments of the electrically conductive layer.

Preferably, the above steps of the method of manufacturing a glazing are performed in the order listed above.

The method for manufacturing an automotive glazing system with touch sensing capabilities may further comprise a step of laminating the glass layer with an additional glass layer to form a laminated glazing.

In embodiments where the at least one electrical connector is arranged inside the laminated glazing, the at least one electrical connector is provided and arranged at the desired position, such as on the inner major surface of the glass layer, on the inner major surface of the additional glass layer or between the inner major surface of the glass layer and the inner major surface of the additional glass layer (such as embedded in the bonding layer that bonds both glass layers), and the glazing is subsequently laminated. As a result of the lamination, the at least one electrical connector is kept fixed in place by the bonding layer.

In embodiments where the at least one electrical connector is arranged on a monolithic glazing or on an outer major surface of a glass layer of a laminated glazing, the at least one connector is preferably attached to the glazing using a conductive element, such as a conductive adhesive or a printed silver paste. In the case of a laminated glazing, the at least one connector may be attached to the glazing before or after the lamination step.

In an embodiment, in the step of providing the coating, the two or more electrically isolated segments of the coating are formed by depositing, mechanical scribing, laser ablation, masking, chemical etching or printing each of the electrically isolated segments on a portion of a major surface of the glass layer.

Optionally, in an embodiment, the method for manufacturing an automotive glazing system further comprises an additional step of providing a protective layer on top of the electrically conductive layer of the coating. In an embodiment, in the step of providing the coating, the segments of protective layer are formed by the same method than the electrically conductive layer segments: depositing, mechanical scribing, laser ablation, masking, chemical etching or printing on a portion of a major surface of the glass layer.

For example, in regions of the glazing where the coating is undesirable, said regions can either be masked (so when the coating deposition is finished, the masked areas are washed away, burned out or removed somehow), or the coating can be removed from the undesired areas by mechanical means such as abrasion, sandblasting, etc., or by chemical means, such as by etching, or even burned such as by laser ablation.

Optionally, in an embodiment, the method for manufacturing an automotive glazing system further comprises, after the step of providing a coating, an additional subsequent step of a thermal process in which the glass layer with the coating disposed on a major surface of the glass layer is exposed to curing temperature. Preferably, the curing temperatures may be from 300°C to 700°C.

Also optionally, in an embodiment, the method for manufacturing an automotive glazing system further comprises an additional step of providing an obscured band for hiding part or the totality of the electrical connectors.

In an embodiment, the obscured band is disposed on the coating and is preferably painted, for example with an organic ink.

In an embodiment, the obscured band is disposed on a major surface different from the major surface where the coating is disposed. In this embodiment, the obscured band is preferably provided:
- by printing the obscured band in the glass layer, preferably using a black-frit; or
- when the glazing is a laminated glazing, by providing one or more opaque interlayer and/or painted interlayer before the lamination step. In this embodiment the obscured band is embodied as one or more opaque interlayer and/or painted interlayer that remains attached to the glazing after the lamination step.

Also optionally, in an embodiment, the method for manufacturing an automotive glazing system further comprises an additional step of providing an anti-fingerprint coating on the coating. In case of a laminated glazing, the additional step of providing an anti-fingerprint coating may be performed before or after the step of lamination.

Also optionally, in an embodiment, the method for manufacturing an automotive glazing system further comprises an additional step of surface modification of the at least one of the segments of the coating to change the roughness of the segment in respect to other adjacent regions of the major surface of the glass layer, wherein said adjacent regions have no segments.

The coating according to the invention can be deposited on a fully bent glass layer (option 1).

According to option 1, in the method for manufacturing a glazing system according to embodiments of the fourth inventive aspect:
- the glass layer is a fully bent glass layer;
- the coating is provided on said fully bent glass layer; and
- the method optionally comprises a step of laminating the glass layer with an additional glass layer to obtain a laminated glazing.

Therefore, according to option 1, the method for manufacturing an automotive glazing system according to the present invention comprises the following steps:
- providing a fully bent glass layer having an inner and an outer surface;
- providing the coating according to any of the embodiments on the fully bent glass layer of the previous step;
- providing at least one electrical connector at a distance from any of the segments of the coating;
- optionally laminating with an additional glass layer to obtain a laminated glazing.
The resulting laminated glazing according to the option 1 will be curved, as the glass layer is a fully bent glass layer.

Preferably, the above steps of the method for manufacturing a glazing according to option 1 are performed in the order listed.

The coating according to the invention can also be deposited on a partially bent glass layer (option 2) or on a flat glass layer (option 3) and after that being bended to his final shape, if desired.

As previously mentioned, the transparent coating advantageously allows to be bended with the glass without any cracks. The coating has high tolerance to temperatures required for glass bending (around 650°C).

According to options 2 and 3, in the method for manufacturing an automotive glazing system according to embodiments of the fourth inventive aspect:
- the glass layer provided is a partially bent glass layer or a flat glass layer;
- the coating is provided on said partially bent glass layer or on said flat glass layer;
- the method optionally comprises a step of performing a bending step to obtain a final curved shape; and
- the method optionally comprises a step of laminating with an additional glass layer to obtain a laminated glazing.

Therefore, according to option 2 and 3, the method for manufacturing a glazing according to the present invention comprises the following steps:
- providing a partially bent glass layer or a flat glass layer;
- depositing the coating according to any of the embodiments on the partially bent glass layer or on the flat glass layer of the previous step;
- optionally performing a bending step onto the result of the previous step to obtain a final curved shape;
- optionally laminating the result of the previous step with an additional glass layer to obtain a laminated glazing.

Preferably, the above steps of the method according to option 2 or 3 are performed in the order listed.

According to options 2 and 3, in the method for manufacturing an automotive glazing system according to embodiments of the fourth inventive aspect, an optional curing step is preferably performed during the bending step.

Regarding the provision of the at least one electrical connector in options 1, 2 and 3, in embodiments where the at least one electrical connector is arranged inside a laminated glazing, the at least one electrical connector is provided and arranged at the desired position, such as on the inner major surface of the glass layer, on the inner major surface of the additional glass layer or between the inner major surface of the glass layer and the inner major surface of the additional glass layer (such as embedded in the bonding layer that bonds both glass layers), and the glazing is subsequently laminated. As a result of the lamination, the at least one electrical connector is kept fixed in place by the bonding layer.

In embodiments where the at least one electrical connector is arranged on a monolithic glazing or on an outer major surface of a glass layer of a laminated glazing, the at least one connector is preferably attached to the glazing using a conductive element, such as a conductive adhesive or a printed silver paste. In the case of a laminated glazing, the at least one connector may be attached to the glazing before or after the lamination step.

In embodiments of the fourth inventive aspect, the coating according to the invention can also be disposed on a complete laminated glazing after lamination.

### DESCRIPTION OF THE DRAWINGS

These and other features and advantages of the invention will be seen more clearly from the following detailed description of preferred embodiments provided only by way of illustrative and non-limiting examples in reference to the attached drawings.
- Figures 1A-1B: These figures show embodiments of an automotive glazing system according to the invention in cross-section through lines X-X' of Figure 7.
- Figures 2A-2C: These figures show embodiments of an automotive glazing system according to the invention in cross-section through lines X-X' of Figure 7.
- Figures 3A-3B: These figures show embodiments of an automotive glazing system according to the invention in cross-section through lines X-X' of Figure 7.
- Figures 4A-4D: These figures show embodiments of an automotive glazing system according to the invention in cross-section through lines X-X' of Figure 7.
- Figures 5A-5C: These figures show embodiments of an automotive glazing system according to the invention in cross-section through lines X-X' of Figure 7.
- Figures 6A-6B: These figures show embodiments of an automotive glazing system according to the invention in cross-section through lines X-X' of Figure 7.
- Figure 7: This figure shows a plan view of an embodiment of an automotive glazing system according to the invention as a roof of a vehicle with electrically controllable touch buttons.
- Figure 8: This figure shows a block diagram schematically illustrating a touch sensing system according to an embodiment of the invention and its cooperation with an automotive electronic control unit.

### DETAILED DESCRIPTION OF THE INVENTION

As will be appreciated by a person skilled in the art, aspects of the present invention may be embodied as a product or method.

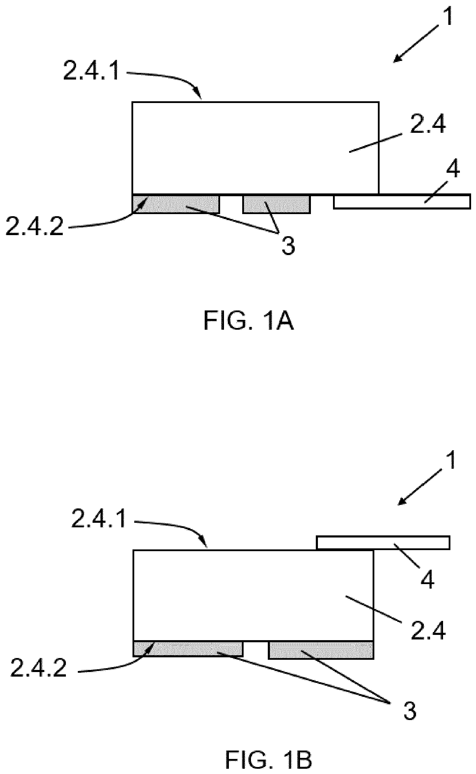

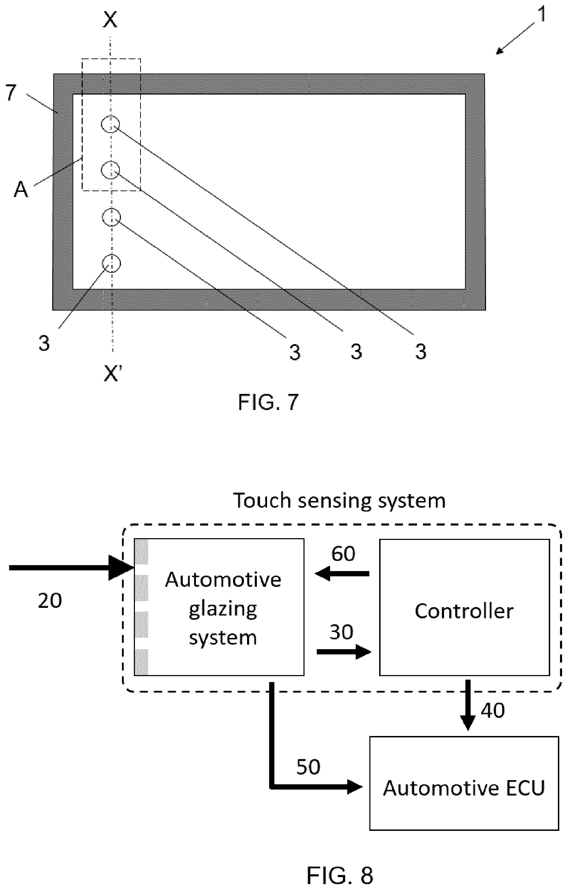

Figures 1 to 6 show a detail "A" of different embodiments of an automotive glazing system (1) with touch sensing capabilities according to the invention. In Figure 7, the part of the automotive glazing system (1) approximately corresponding to this detail "A" is highlighted in a rectangle with a dashed line to serve as an indication of the part shown in Figures 1 to 6. However, the embodiments of Figures 1 to 6 may differ from the embodiment shown in Figure 7. The cross-sectional views of different embodiments of an automotive glazing system (1) of Figures 1 to 6 are not to scale and are simplified schematic representations of the automotive glazing system. In all of Figures 1 to 6, two segments of coating (3) and only one electrical connector (4) are shown. However, the automotive glazing system can comprise a different number of segments and a different number of electrical connectors, for example, one electrical connector (4) for each segment (3) of coating.

Figures 1A-1B show a detail "A" of two embodiments of an automotive glazing system (1) with touch sensing capabilities according to the invention.

In both embodiments the automotive glazing system (1) comprises a glazing. The glazing comprises a glass layer (2.4) having two major surfaces (2.4.1, 2.4.2), and a transparent coating (3) disposed on one of the major surfaces (2.4.2) of the glass layer (2.4). The coating (3) comprises an electrically conductive layer that has a sheet resistance less than 250 Ohm/sq. The coating (3) is structured in a plurality of electrically isolated segments, wherein each one of the segments of the coating (3) is spaced apart from any adjacent segment. This detail "A" only shows two segments of the coating (3), although additional segments may be present in the automotive glazing system.

The automotive glazing system (1) further comprises at least one electrical connector (4) spaced apart from the segments of the coating (3). Each electrical connector (4) is capacitively coupled to a respective segment of the coating (3), so that the electrical connection between a segment of the coating (3) and a respective electrical connector (4) is made without physical contact between them.

The plurality of segments of the coating (3) define a plurality of touch electrodes configured to be touched by a user and to act as buttons or sliders. The electrical connectors (4) are capacitively coupled to the segments of the coating (3), preferably one electrical connector (4) coupled to one segment of the coating (3). The electrical connectors (4) are connectable to a touch sensing electronics, for example through a flexible printed circuit (FPC) or wires, to detect capacitive changes of the touch electrodes when a human finger approaches the segments of the coating (3).

The touch electrodes (i.e. the segments of the coating (3)) can have any shape to be used as single touch buttons and/or as sliders, for example to control dimmable capabilities of the glazing.

The shape of the touch electrodes can be structured by mechanical, laser or chemical methods and/or printed by well-known methods in the industry (e.g. screen printing, inkjet, aerosol, etc.).

In an embodiment, each electrical connector (4) comprises a busbar made of a conductive material, preferably conductive foils and/or conductive wires.

In the embodiments of Figures 1A-1B, the glazing is monolithic, i.e. it comprises a single glass layer (2.4). In other embodiments, the glazing comprises more than one glass layer.

In the embodiment of Figure 1A the electrical connector(s) (4) and the coating (3) are disposed on the same major surface (2.4.2) of the single glass layer (2.4). In the embodiment of Figure 1B the electrical connector(s) (4) and the coating (3) are disposed on opposed major surfaces (2.4.1, 2.4.2) of the single glass layer (2.4).

When the automotive glazing system (1) is mounted as part of a vehicle, such as embodied as part of a sidelite window, a roof, a windshield or a backlite of the vehicle, a first major surface (2.4.1) of the glass layer (2.4) (also called herein outer major surface) is intended to face the exterior of the vehicle and a second major surface (2.4.2) of the glass layer (2.4) (also called herein inner major surface) is intended to face the interior of the vehicle. As can be seen, the coating (3) is arranged on the inner major surface (2.4.2) intended to face the interior of the vehicle, such as to be reachable by a user placed inside the vehicle. This inner major surface (2.4.2) of the single glass layer (2.4) is also called herein innermost surface of the monolithic glazing.

In an embodiment, the electrically conductive layer comprises one material selected from: TCO, Ag-based layer, metal mesh, PEDOT, carbon-based materials, thin film metal or alloy-based material or a combination thereof.

In an embodiment, the electrically conductive layer has a sheet resistance less than 100 Ohm/sq, and more preferably less than 30 Ohm/sq.

In an embodiment, the coating (3) has a visible light transmission above 80%.

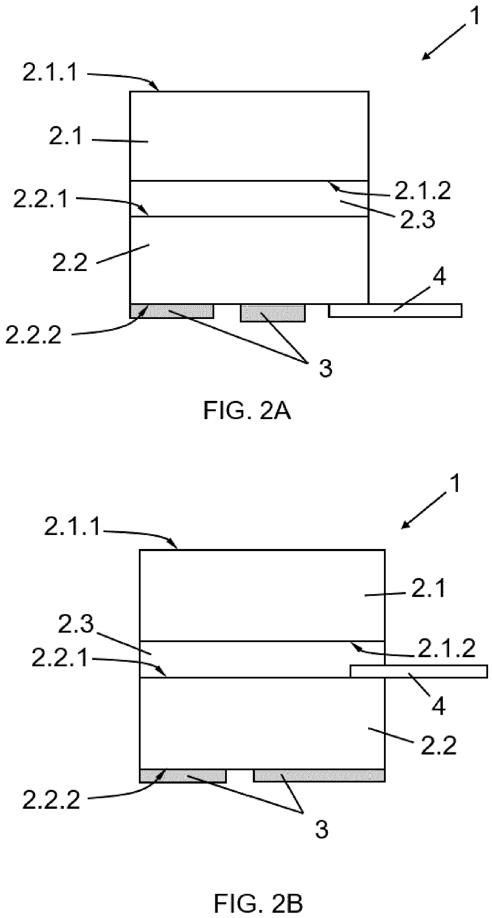

Figures 2A-2C show a detail "A" of three embodiments of an automotive glazing system (1) with touch sensing capabilities according to the invention, wherein the glazing is a laminate comprising two glass layers (2.1, 2.2) bonded one to another. Compared to the embodiments of Figures 1A-1B, in the embodiments of Figures 2A-2C, the glazing comprises, additionally to the glass layer (2.2) having the coating (3) on a major surface thereof, an additional glass layer (2.1) bonded to the glass layer (2.2) by a thermoplastic layer (2.3). The glass layer (2.2) (also called first glass layer herein) has an inner major surface (2.2.1) and an outer major surface (2.2.2). Similarly, the additional glass layer (2.1) (also called second glass layer herein) has an outer major surface (2.1.1) and an inner major surface (2.1.2), wherein the inner major surface (2.1.2) of the additional glass layer (2.1) faces, and is bonded to, the inner major surface (2.2.1) of the glass layer (2.2). In the embodiments of Figures 2A-2C the segments of the coating (3) are arranged on the outer major surface (2.2.2) of the glass layer (2.2).

In the embodiment of Figure 2A, the at least one electrical connectors (4) is disposed on a portion of the outer major surface (2.2.2) of the glass layer (2.2), spaced apart from the segments of the coating (3). Each of the at least one electrical connector (4) is capacitively coupled to a respective segment of the coating (3), so that the electrical connection between a segment of the coating (3) and a respective electrical connector (4) is made with no physical contact between them.

In the embodiment of Figure 2B, the at least one electrical connector (4) is disposed on a portion of the inner major surface (2.2.1) of the glass layer (2.2). In this embodiment the at least one electrical connector (4) is disposed spaced apart from any of the segments of the coating (3) by at least the thickness of the glass layer (2.2), so that the electrical connection between a segment of the coating (3) and a respective connector (4) is made without any physical contact between them, through the capacitive coupling between a segment of the coating (3) and an electrical connector (4) which are separated by the glass layer (2.2), wherein the glass layer (2.2) is an insulator.

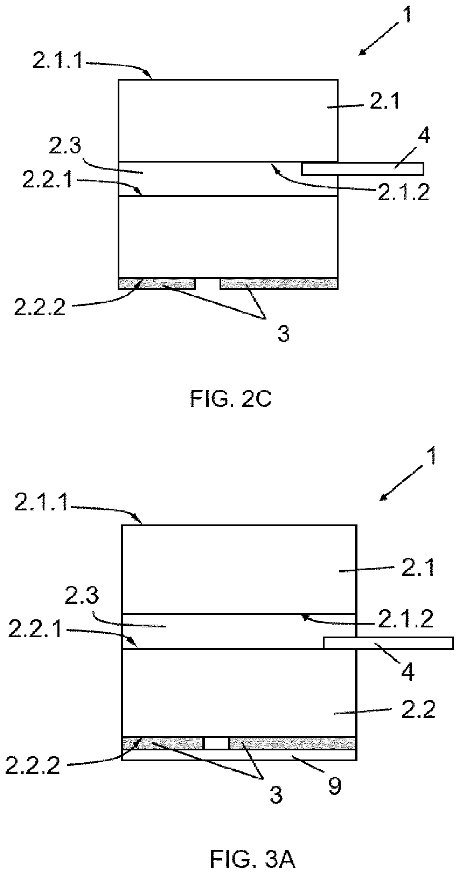

In the embodiment of Figure 2C, the at least one electrical connector (4) is disposed on a portion of the inner major surface (2.1.2) of the additional glass layer (2.2). In this embodiment the at least one electrical connector (4) is disposed spaced apart from the segments of the coating (3) by at least the thickness of the glass layer (2.2) and at least a portion of the thickness of the thermoplastic layer (2.3).

In other embodiments (not shown) the electrical connector(s) (4) is/are disposed between the inner major surface (2.2.1) of the glass layer (2.2) and the inner major surface (2.1.2) of the additional glass layer (2.1), such as embedded at least partially in the thermoplastic layer (2.3).

Figures 3A-3B show a detail "A" of two embodiments of an automotive glazing system (1) with touch sensing capabilities according to the invention, wherein the glazing comprises an anti-fingerprint coating (9).

Figure 3A shows an embodiment of an automotive glazing system (1) similar to the one depicted in Figure 2B. However, in the embodiment of Figure 3A, the glazing further comprises an anti-fingerprint coating (9) disposed on the coating (3), such that the coating (3) is located between the anti-fingerprint coating (9) and the major surface (2.2.2) of the glass layer (2.2). The anti-fingerprint coating (9) may be arranged as a continuous layer on the segments of the coating (3) or as a discontinuous layer structured in a plurality of portions, each portion provided on a segment of the coating (3).

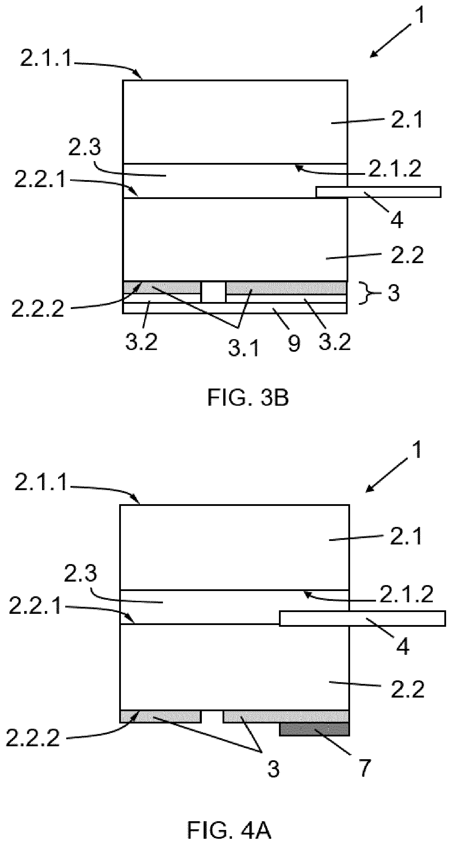

In any of the embodiments disclosed, the coating (3) may comprise one or more additional layers. This is schematically shown in Figure 3B, wherein an embodiment of an automotive glazing system (1) similar to the one depicted in Figure 2B is shown. However, in the embodiment of Figure 3B the coating (3) comprises, additionally to the electrically conductive layer (3.1), a protective dielectric layer (3.2) disposed such that the electrically conductive layer (3.1) is located between the protective dielectric layer (3.2) and the major surface (2.2.2) of the glass layer (2.2). The protective dielectric layer (3.2) protects the electrically conductive layer (3.1) from mechanical damage and improves long time performance. Both the electrically conductive layer (3.1) and the protective dielectric layer (3.2) are arranged as discontinuous layers structured in a plurality of portions. Therefore, all the layers of the coating (i.e. the electrically conductive layer (3.1) and the optional protective dielectric layer (3.2)) are arranged as discontinuous layers structured in the same portions, thus forming the required plurality of segments of the coating (3).

The embodiment of Figure 3B further comprises an anti-fingerprint coating (9) disposed on the protective dielectric layer (3.2), such that the protective dielectric layer (3.2) is located between the electrically conductive layer (3.1) and the anti-fingerprint coating (9). In other embodiments, the protective dielectric layer (3.2) is present and the anti-fingerprint coating (9) is omitted. In other embodiments, the protective dielectric layer (3.2) is omitted and the anti-fingerprint coating (9) is present.

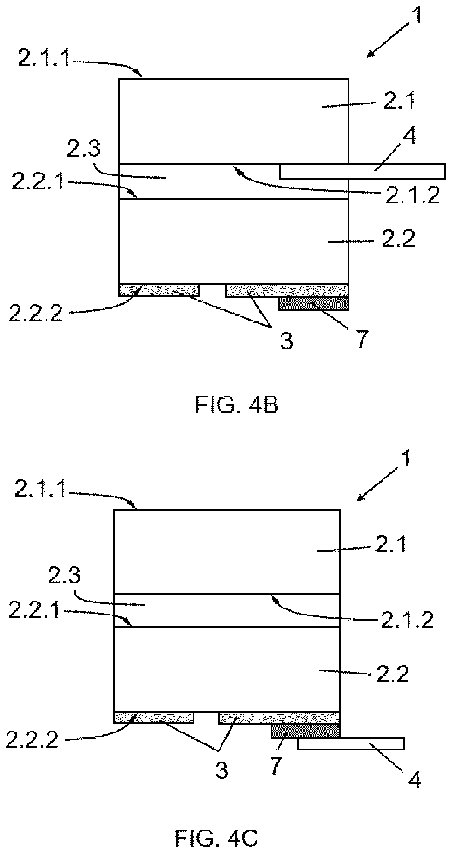

Figures 4A-4D show a detail "A" of embodiments of an automotive glazing system (1) with touch sensing capabilities according to the invention, wherein the automotive glazing system (1) comprises an obscured band (7).

Particularly, figures 4A-4B show a detail "A" of two embodiments of an automotive glazing system (1) similar to the ones depicted in Figures 2B-2C. However, in the embodiments of Figures 4A-4B the automotive glazing system (1) further comprises an obscured band (7) disposed on a portion of the outer surface (corresponding to the top surface) of the coating (3), so that said portion of the coating (3) is located between the obscured band (7) and the glass layer (2.2).

Figure 4C shows a detail "A" of an embodiment of an automotive glazing system (1) wherein an obscured band (7) is disposed between a portion of the coating (3) and a portion of an electrical connector (4). In this embodiment, the obscured band (7) keeps the electrical connector (4) spaced apartfrom the nearest segment of coating (3).

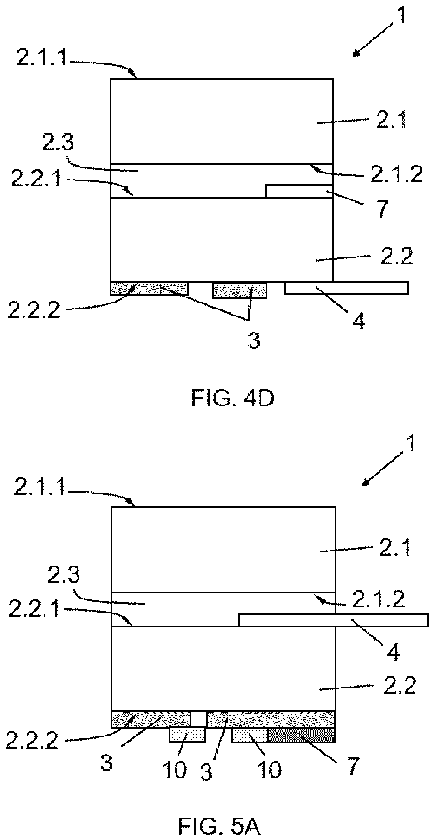

Figure 4D shows a detail "A" of an embodiment of an automotive glazing system (1) similar to the one shown in Figure 2A. However, in the embodiment of Figure 4D, the automotive glazing system (1) comprises an obscured band (7) disposed on a portion of the inner major surface (2.2.1) of the glass layer (2.2), i.e. the surface of the glass layer (2.2) opposed to the surface where the coating (3) is disposed.

In an embodiment the obscured band (7) is disposed around the perimeter of the glazing, as shown in Figure 7.

In an embodiment, the obscured band (7) occupies at least the projecting area of the at least one electrical connector (4) on the glass layer (2.2), such that the electrical connector(s) (4) is/are partially or completely hidden by the obscured band (7).

Figures 5A-5C show a detail "A" of embodiments of an automotive glazing system (1) with touch sensing capabilities according to the invention, wherein the automotive glazing system (1) comprises a graphic obscuration (10).

Figure 5A shows a detail "A" of an embodiment of an automotive glazing system (1) similar to the one depicted in Figure 4A. However, in the embodiment of Figure 5A the automotive glazing system (1) further comprises a graphic obscuration (10). The graphic obscuration (10) is arranged at least partially delimiting the segments of the coating (3) for indicating the touch area to be touched by the user. The graphic obscuration (10) may be arranged at different parts of the glazing. In the embodiment of Figure 5A, the graphic obscuration (10) is arranged on the top surface of the coating (3). As visible in Figure 5A, the graphic obscuration (10) is arranged so that the coating (3) is located between the graphic obscuration (10) and the glass layer (2.2). The graphic obscuration (10) may be provided as a boundary delimiting an inner area of one or more segments, as an area corresponding to the area of one or more segments or as a combination of both. In the embodiment of Figure 5A, the graphic obscuration (10) is arranged as a boundary delimiting an inner area of the segments intended to be touched.

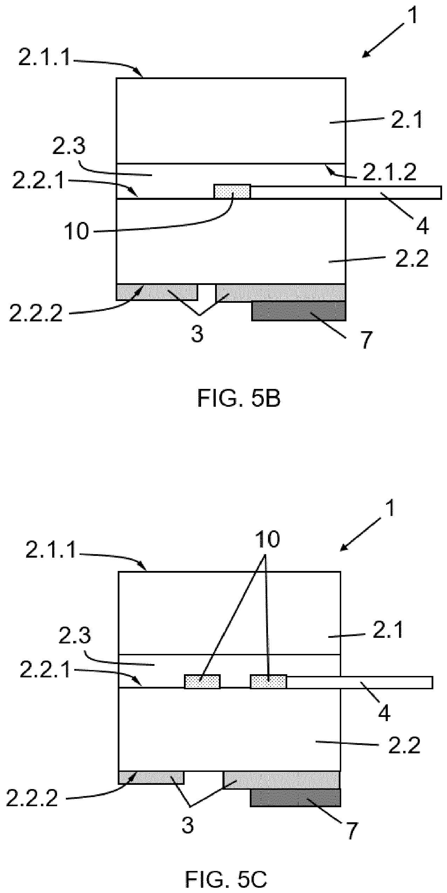

Figure 5B shows a detail "A" of an embodiment of an automotive glazing system (1), wherein the graphic obscuration (10) is arranged on the inner major surface of the glass layer (2.2), i.e. the surface of the glass layer (2.2) opposed to the surface having the coating. In this embodiment the graphic obscuration (10) is arranged as an area corresponding to the area of one segment intended to be touched by the user. In an operative situation of the automotive glazing system (1), with the automotive glazing system (1) assembled in a vehicle, the graphic obscuration (10) is visible through the glass layer (2.2), thus indicating the touch area.

Figure 5C shows a detail "A" of an embodiment of an automotive glazing system (1) similar to the one depicted in Figure 5B. However, in the embodiment of Figure 5C, the graphic obscuration (10) is arranged as boundaries delimiting inner areas of the segments intended to be touched. As in the embodiment of Figure 5B, in an operative situation of the automotive glazing system (1), with the automotive glazing system (1) assembled in a vehicle, the graphic obscuration (10), and thus the boundaries, are visible through the glass layer (2.2), thus indicating the touch area.

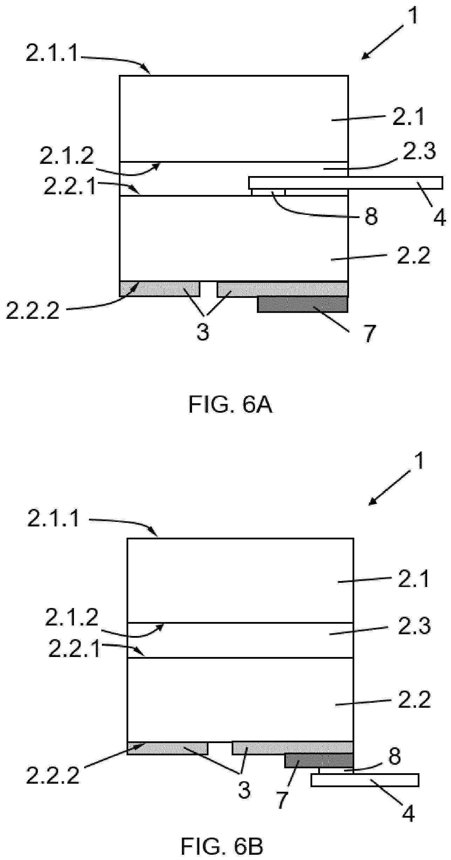

Figures 6A-6B show a detail "A" of embodiments of an automotive glazing system (1) with touch sensing capabilities according to the invention.

The embodiment of Figure 6A is similar to the one depicted in Figure 4A. However, in the embodiment of Figure 6A the electrical connector (4) is attached to the glass layer (2.2) using a conductive element (8), the conductive element (8) being conductive adhesive or a printed silver paste.

The embodiment of Figure 6B is similar to the one depicted in Figure 4C. However, in the embodiment of Figure 6B the electrical connector (4) is attached to the obscured band (7) using a conductive element (8), the conductive element (8) being conductive adhesive or a printed silver paste.

Figure 7 shows an embodiment of an automotive glazing system, for example being part of an automotive roof, wherein the coating (3) is structured to form four separate segments, each segment acting as a touch capacitive electrode. A peripheral obscured band (7) is also represented. The number and shape of the segments is illustrative and may be different in other embodiments. The peripheral obscured band (7) may be omitted in other embodiments.

In an embodiment, at least a portion of an outer surface (corresponding to the top surface) of one of the segments of the electrically conductive layer has a surface roughness (not shown) different from that of adjacent regions of the major surface of the glass layer where no segments are present.

Figure 8 shows a block diagram schematically illustrating a touch sensing system according to an embodiment of the invention and its cooperation with an automotive electronic control unit (ECU). The touch sensing system comprises an automotive glazing system (1) according to the invention, a touch sensing electronics (not shown) and a controller. In an operative situation of the touch sensing system, the electrical connector(s) (4) is/are connected to the touch sensing electronics, for example through a flexible printed circuit (FPC) or wires. Also, the electrical connector(s) (4) is/are capacitively coupled to the segments of the coating (3), which act as touch capacitive electrodes. In Figure 8 four touch electrodes are schematically depicted as grey areas. The touch sensing electronics, controlled by the controller, apply a voltage (60) to the electrical connectors (4). The touch sensing electronics detects when a human finger approaches (20) the touch electrodes and the controller reads (30) the capacitive changes of the touch electrodes. Optionally, the touch sensor controller can also send (60) data to the automotive glazing system (1). The controller is connected (40) to the ECU of the vehicle that controls one or more functional elements based on the capacitive changes read. The automotive ECU can also receive (50) data directly from the automotive glazing system.

The functional element may be one or more electro-optical functional, lighting and/or display element and/or one or more peripheral controllable by the ECU as a result of the instructions input by the user via the user's interaction with the automotive glazing system. Non-limited examples of electro-optical functional elements include: variable light transmission films such as PDLC (Polymer Dispersed Liquid Crystal), SPD (Suspended Particle Device) and LC (Liquid Crystal) films, also known as smart-glass. A non-limited example of lighting is lighting for interior cabin illumination. A non-limited example of display elements is any display integrated or embedded into the glazing. Non-limited examples of peripherals (devices integrated exterior to the glazing) are: reading light, radio, etc.

## Claims

1. An automotive glazing system (1) with touch sensing capabilities, comprising:
- a glazing comprising:
- a glass layer (2.4, 2.2) having two major surfaces (2.4.1, 2.4.2, 2.2.1, 2.2.2), and
- a transparent coating (3) disposed on at least one portion of a major surface (2.4.2, 2.2.2) of the glass layer (2.4, 2.2), wherein the coating (3) comprises an electrically conductive layer (3.1) that has a sheet resistance less than 250 Ohm/sq, and wherein the coating (3) is structured into two or more electrically isolated segments, wherein each one of the segments of the coating (3) is spaced apart from any adjacent segment of the coating (3), and
- at least one electrical connector (4) spaced apartfrom any of the segments of the coating (3),
wherein each electrical connector (4) is capacitively coupled to a segment of the coating (3), so that the electrical connection between a segment of the coating (3) and an electrical connector (4) is made with no physical contact between them.

2. The automotive glazing system (1) according to claim 1, wherein the at least one electrical connector (4) is disposed at a location spaced apart from any of the segments of the coating (3) by at least the thickness of one glass layer (2.4, 2.2), so that the capacitive coupling between a segment of the coating (3) and a respective connector (4) is made with the separation of at least one glass layer (2.4, 2.2) of the glazing.

3. The automotive glazing system (1) according to any of the preceding claims, wherein the at least one electrical connector (4) is disposed on the same major surface where the coating (3) is disposed.

4. The automotive glazing system (1) according to any of the preceding claims, wherein the capacitive coupling between the electrical connectors (4) and the segments of the coating (3) is one-to-one.

5. The automotive glazing system (1) according to any of the preceding claims, wherein the coating (3) is a low-emissivity coating.

6. The automotive glazing system (1) according to any of the preceding claims, wherein the glazing further comprises an additional glass layer (2.1),
wherein the glass layer (2.2) and the additional glass layer (2.1) are bonded together, wherein the major surfaces (2.2.1, 2.2.2) of the glass layer (2.2) are an inner major surface (2.2.1) and an outer major surface (2.2.2),
wherein the additional glass layer (2.1) has an outer major surface (2.1.1) and an inner major surface (2.1.2), wherein the inner major surface (2.1.2) of the additional glass layer (2.1) faces the inner major surface (2.2.1) of the glass layer (2.2);
wherein each electrical connector (4) is disposed:
- on a portion of the inner major surface (2.2.1) of the glass layer (2.2),
- on a portion of the inner major surface (2.1.2) of the additional glass layer (2.1),
- between the inner major surface (2.2.1) of the glass layer (2.2) and the inner major surface (2.1.2) of the additional glass layer (2.1), or
- on a portion of the outer major surface (2.2.2) of the glass layer (2.2); and
wherein the coating (3) is disposed on at least one portion of the outer major surface (2.2.2) of the glass layer (2.2).

7. The automotive glazing system (1) according to any of claims 1 to 5, wherein the glazing comprises a single glass layer (2.4); and wherein each electrical connector (4) and the coating (3) are disposed on the same or on opposed major surfaces (2.4.1, 2.4.2) of the single glass layer (2.4).

8. The automotive glazing system (1) according to any of the preceding claims, wherein the electrically conductive layer (3.1) has a sheet resistance less than 100 Ohm/sq, and more preferably less than 30 Ohm/sq.

9. The automotive glazing system (1) according to any of the preceding claims, wherein at least a portion of one one or more of the segments of the coating (3) has a surface roughness different from adjacent regions of the major surface (2.4.2, 2.2.2) of the glass layer (2.4, 2.2) with no segments.

10. The automotive glazing system (1) according to any of the preceding claims, further comprising an obscured band (7) disposed:
- on the coating (3) so that the coating (3) is located between the obscured band (7) and the glass layer (2.4. 2.2),
- on the major surface (2.2.1, 2.4.1) of the glass layer (2.2, 2.4) opposed to the major surface on which the coating (3) is disposed, and/or
- on a major surface (2.1.1, 2.1.2) of the additional glass layer (2.1),
wherein the obscured band (7) is placed overlapping at least part of the projected area of the electrical connectors (4) on the glass layer (2.4, 2.2).

11. The automotive glazing system (1) according to any of the preceding claims, further comprising a graphic obscuration (10), wherein the graphic obscuration (10) is disposed such that it delimits at least partially the segments of the coating (3), and wherein the graphic obscuration (10) is disposed:
- on the coating (3) so that the coating (3) is located between the graphic obscuration (10) and the glass layer (2.4. 2.2),
- on the major surface of the glass layer (2.2) opposed to the major surface on which the coating (3) is disposed, and/or
- on a major surface (2.1.1, 2.1.2) of the additional glass layer (2.1).

12. The automotive glazing system (1) according to any of the preceding claims, further comprising an anti-fingerprint coating (9) disposed on the coating (3), so that the coating (3) is located between the anti-fingerprint coating (9) and the major surface (2.4.2, 2.2.2) of the glass layer (2.4, 2.2).

13. A sidelite window, a roof, a windshield, or a backlite for a vehicle, comprising the automotive glazing system (1) according to any of the preceding claims.

14. A vehicle having at least one sidelite window, a roof, a windshield, or a backlite according to claim 13.

15. A method for manufacturing the automotive glazing system (1) with touch sensing capabilities according to any of claims 1 to 12, the method comprising the following steps:
- providing a glass layer (2.4, 2.2),
- providing a transparent coating (3) on at least one portion of a major surface (2.4.2, 2.2.2) of the glass layer (2.4, 2.2), wherein the coating (3) comprises an electrically conductive layer (3.1) that has a sheet resistance less than 250 Ohm/sq, and wherein the coating (3) is structured in two or more electrically isolated segments, wherein each one of the segments is spaced apart from any adjacent segment of the electrically conductive layer (3.1), and
- providing at least one electrical connector (4) spaced apart from any of the segments of the coating (3).

16. The method according to the previous claim, wherein in the step of providing the coating (3), the two or more electrically isolated segments (3.1.1, 3.1.2) are formed by depositing, mechanical scribing, laser ablation, masking, chemical etching or printing on on a portion of a major surface (2.4.2, 2.2.2) of the glass layer (2.4, 2.2).
